Europäisches Patentamt

European Patent Office

Office européen des brevets

(19)

(11) Publication number: **0 342 301**

**A1**

## (12) EUROPEAN PATENT APPLICATION

(21) Application number: 88830215.5

(22) Date of filing: 17.05.88

(51) Int. Cl.⁴: **B62D 33/02**

(43) Date of publication of application:
23.11.89 Bulletin 89/47

(84) Designated Contracting States:
AT BE CH DE ES FR GB GR IT LI LU NL SE

(71) Applicant: OFFICINE ROMANAZZI S.p.A.
Via Tiburtina 1072
I-00156 Rome(IT)

(72) Inventor: Peruzzi Luigi
c/o Officine Romanazzi S.p.A. Via Tiburtina
1072
I-00156 Rome(IT)

(74) Representative: de Simone, Domenico et al
Ing. Barzanò & Zanardo Roma S.p.A. Via
Piemonte 26
I-00187 Roma(IT)

(54) Improved load bearing element, in particular overturning side board of industrial vehicles.

(57) This invention relates to a load bearing element (1), and more particularly to an overturning side board for industrial or transport vehicles, said element being preferably made up of a prepainted, zinc plated steel, and consisting of a first structural shape (2) whose upper edge has a portion (4) which is at right angles to its lateral surface, and has a shaped bend, and whose lower edge (8) is so bent as to form a U shaping whose portion perpendicular to the surface of the structural shape (2) is smaller in length with respect to the portion (4) of the upper edge; said element consisting also of a second structural shape (3), whose height is equal to that of said first structural shape (2),and whose upper edge (5) has a portion which is perpendicular to its lateral surface, and has a shaped bend, which can be coupled with the shaped bend of said first structural shape (2), and has a bottom edge (9) which is bent so as to form a U shaping whose portion which is perpendicular to the lateral surface of the structural shape (3) is smaller in length with respect to the portion of the upper edge (5); said element also consisting of a third structural shape (11), as an inverted U with bent edges, which is coupled at the inside part with the lower edges of said first (2) and second (3) structural shapes; said element being also made up of locking means, and in particular of

the hinge of said side board, said means being fastened to said third structural shape (11); said first (2) and second (3) structural shapes being realized so as to be spaced by a distance equal to the width of said third structural shape (11), and so as to have at the center parts one or more shapings that cause them to fit together laterally through some extent.

Fig. 1

## AN IMPROVED LOAD BEARING ELEMENT, IN PARTICULAR AN OVERTURNING SIDE BOARD OF INDUS-
## TRIAL VEHICLES

The present invention relates to an improved load bearing element, in particular to an overturning side board for transport vehicles.

More particularly, this invention relates to an element of the type mentioned above, which is so realized as to be very easily obtained and assembled, with very limited costs.

In the present technology, overturning side boards for transport vehicles are generally realized in a single piece, which is preferably obtained by extrusion and is made up of aluminum or an alloy of the same.

The realization of such type of element with steel, as occurs at present in most cases, needs the employment of welding operations for connecting the edges of the sheet of the workpiece.

It is well known to those skilled in the art that such welding operations induce inevitably deformations in the structure, so giving rise to some weaker points.

Moreover, the employment of such materials undergoing said operations does not warrant the obtainment of a finished product after the operations in question, so that it is necessary to proceed with a painting step in order to finish the piece definitively.

Some of such drawbacks could be overcome by working aluminum through extrusion.

Apart from not negligible aspect of the costs connected to such operation, it is to be remarked that in general the obtainment of a product shaped in a single piece by extrusion is size-limited by the dimensions of the extruding machine. Indeed, if an element of remarkable sizes is to be obtained, it is necessary to start from a semifinished product whose sizes are so large that the working procedure should be carried out on a line too much long.

The Applicant being aware of the problems mentioned above, has realized a load bearing element, and more particularly an overturning side board, which is obtained with no welding operation during the assembly of the same, and employing materials whose costs are definitely limited.

The solution according to the present invention also implies extremely simple operations for assembling the element, and does not set dimensional limits to the piece to be obtained, also because of the fact that said element is realized through simpler shaping operations with respect to those employed at the present time, as the shapes in question are much less complex.

Finally, by means of the technical teachings supplied by the present invention, it is possible to obtain an element made up of a structural shape and already finished, which needs no further painting work.

These and other results are obtained according to the present invention realizing a load bearing element, in particular an overturning side board, which is made up of three structural shapes, two of them being of equal heights, with upper edges so bent as to couple to each other keeping the surfaces of said two structural shapes spaced, and with lower edges bent in the shape of U so as to house the third structural shape which is longitudinal and is embedded in the bends of said lower edges, so forming, in cooperation with a mechanical means, for instance with the hinge of the side board, the locking member of the whole structure.

Accordingly, it is a specific object of the present invention a load bearing element, and more particularly an overturning side board for industrial or transport vehicles, said element consisting of a first structural shape whose upper edge has a portion perpendicular to the lateral surface of the element itself, and having a shaped bend, and whose lower edge is so bent as to give rise to a U-shaped part whose portion which is at right angles to the surface of the first structural shape is smaller in length with respect to the portion of the upper edge; of a second structural shape whose height is equal to that of said first structural shape, and whose upper edge has a portion perpendicular to the lateral surface of the shape and has a shaped bend, which can be coupled with theshaped bend of said first structural shape, the lower edge of said second structural shape being so bent as to create a U-shaped part, whose portion which is at right angles to its lateral surface is smaller in length with respect to the portion of the upper edge; of a third structural shape, in the form of an inverted U with bent edges which is coupled with the lower edges of said first and second structural shape; and of locking mechanical means fastened on said third structural shape; said first and second structural shapes being so realized as to be spaced by a distance equal to the width of said third structural shape, and so as to have at the central parts one or more shaped portions causing them to fit together laterally a certain extent.

Preferably, the structural shapes employed in the element according to the present invention are made up of zinc plated steel, which material will be of the so-called "pre-plainted" type in order to obtain a finished product.

Again according to the present invention, said locking mech anical means are, in the case of an overturning side board, the hinges of the side board itself.

Further according to the present invention said first structural shape has a lateral surface which is substantially flat whereas the second structural shape has a shaping allowing its central part to be in contact with the lateral surface of the first structural shape.

In order to strengthen the whole structure, rivets can be provided in the zones of the two lateral surfaces of the first and the second structural shapes which fit together.

If it is desidered to increase the height of the element according to the present invention, a further structural shape element can be coupled with said third structural shape through said locking means, which means can consist of bolts or the like, said further structural shape element having at the top part a closed edge which can be coupled with said third structural shape of the load bearing element according to the invention and, at the bottom part, an edge having bends similar to those of the lower edges of said first and second structural shapes.

The present invention will be disclosed in the following according to some preferred embodiments of the same, with particular reference to the figures of the enclosed drawings, wherein:

Figure 1 is a vertical cross section view of a load bearing element according to the present invention;

Figure 2 is a vertical cross section of the element shown in Figure 1; and

Figure 3 is a vertical cross section view of a structural shape for increasing the height, connected to the element shown in Figure 1.

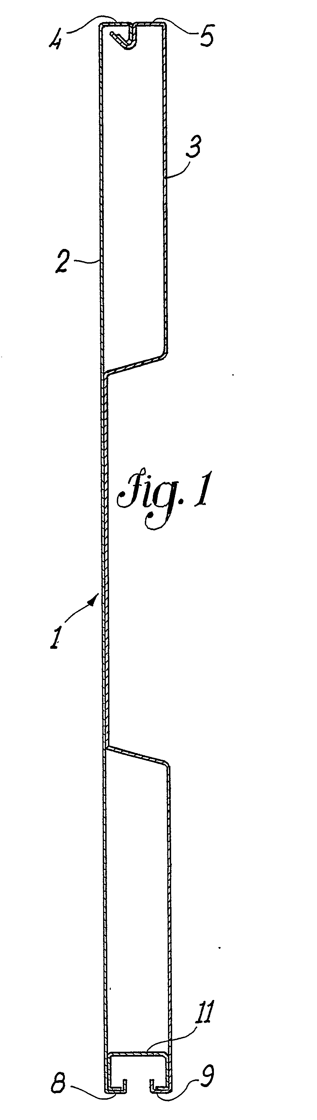

With reference now to Figures 1 and 2, the side board 1 realized according to the present invention comprises a first struc tural shape 2 whose lateral surface is substantially flat, and a structural shape 3 which is convex laterally towards the inside part, which convexity causes its lateral surface to fit together with the lateral surface of said first structural shape 2.

The structural shapes 2 and 3 have at the top part (see in particular Figure 2) their edges so bent as to have opposite horizontal portions 4 and 5 defining the mutual distance of the two structural shapes 2 and 3, and the bends 6 and 7 towards the inside part which are so shaped as to become mutually coupled when assembling the side board 1 according to the invention, so strengthening mechanically the whole structure to some extent.

The lower edges of the structural shapes 2 and 3 are, on the contrary, U-shaped and have horizontal portions 8, 9 at a lower position with respect to the portions 4 and 5, so as to realize a lower opening 10.

The edges of the third structural shape 11 forming the side board 1 become coupled with said U-shaped edges. The width of the structural shape 11 is equal to that of the two portions 4 and 5 arranged side by side.

The structural shape 11 acts as a coupling means for the two structural shapes 2 and 3.

By insertion of the hinge (not shown) into the opening 10 and by coupling mechanically the same with the structural shape 11, the whole structure of the side board 1 becomes locked without the need for any further operations.

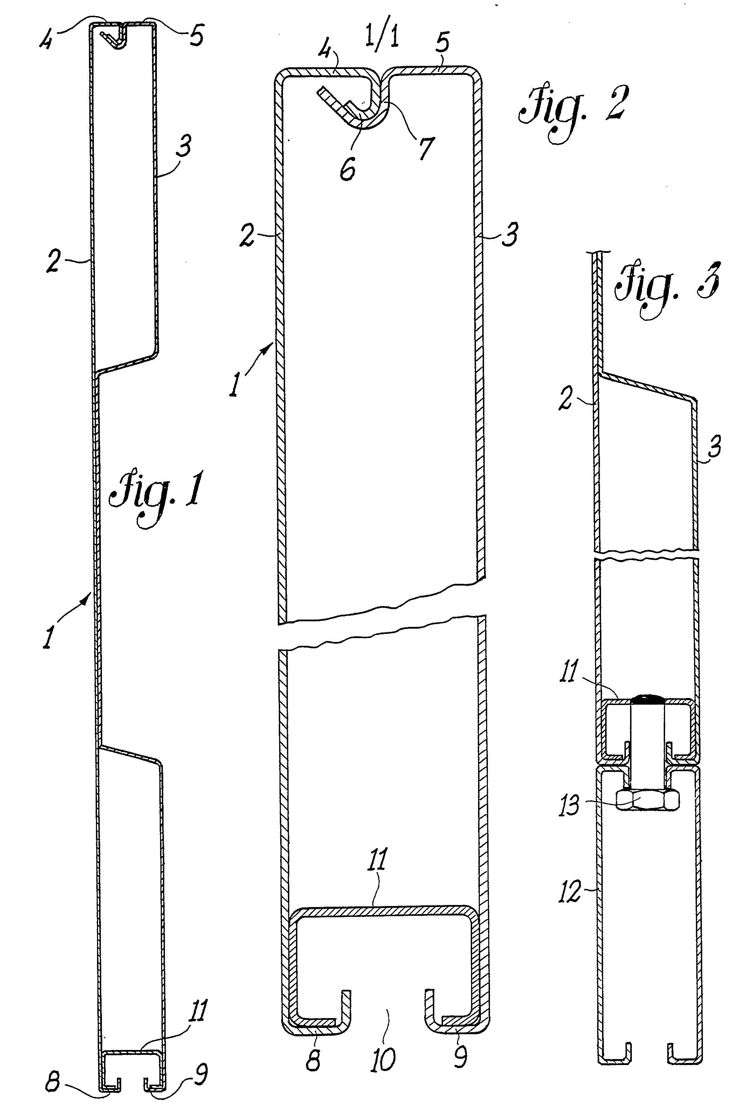

The structural shape 12 shown in Figure 3 is employed when a higher side board 1 is desired, without the need for producing side boards 1 of different heights.

A mechanical coupling is obtained between the structural shapes 11 and 12 through the bolts 13, which coupling acts mechanically just like the coupling between the hinge and the structural shape 11.

The hinge is in turn coupled with the lower part, which is open, of the structural shape 12.

From the above disclosure it can be understood that, realizing the structural shapes 2, 3, 11 and possibly 12 employing pre-painted, zinc plated steel, a side board is obtained which is ready finished, mechanically strong, obtainable through extremely simple operations and with materials which are economically competitive, and which can be assembled in a very simple way with no need for welding operations.

The present invention has been disclosed with specific reference to some preferred embodiments of the same, but it is to be understood that modifications and/or changes can be introduced in the same by those who are skilled in the art without departing from the scope of the present invention.

**Claims**

1. A load bearing element, in particular an overturning side board for industrial or transport vehicles, characterized in that it is made up of a first structural shape whose upper edge has a portion at right angles to its lateral surface and a shaped bend, and whose lower edge is so bent as to form a U-shaping whose portion which is perpendicular to the structural shape surface is smaller in length with respect to the portion of the upper edge; of a second structural shape whose height is equal to that of said first structural shape, and whose upper edge has a portion perpendicular to its lateral surface and a shaped bend, which can be coupled with the shaped bend of said first structural shape, the lower edge of said second structural shape being so bent as to form a U shaping, whose portion perpendicular to its lateral surface is smaller in length with respect to the portion of the upper edge; of a third structural shape consisting of an inverted U with bent edges which is coupled at the inside part with the lower edges of said first and second structural shapes; of locking means which are fastened to said third structural shape; said first and second structural shaped being so realized as to be spaced by a distance which is equal to the width of said third structural shape, and so as to have at the center parts one or more shapings that cause them to fit together laterally through some extent.

2. A load bearing element according to claim 1, characterized in that said structural shapes are made up of zinc plated steel.

3. A load bearing element according to claim 2, characterized in that said zinc plated steel is of the pre-painted type.

4. A load bearing element according to claim 1, characterized in that said locking means are the hinges for the overturning motion, which are coupled mechanically with said third structural shape.

5. A load bearing element according to claim 1, characterized in that the lateral surface of said first structural shape is substantially flat, and the lateral surface of said second structural shape is of a shaping allowing its central portion to be in contact with the central portion of the lateral surface of said first structural shape.

6. A load bearing element according to claims 1 or 5, characterized in that strengthening rivets are provided in the zone of the lateral surfaces of said first and second structural shapes which fit together.

7. A load bearing element according to anyone of the preceding claims, characterized in that a further structural shape element is coupled with said third structural shape through said locking means, said further structural shape having at the top part a closed edge which can be coupled to the third structural shape and, at the bottom part, an edge having bends similar to those of the lower edges of said first and second structural shape.

8. A load bearing element according to claim 7, characterized in that said locking means between the third structural shape and said further structural shape element consist of bolts.

*Fig. 1*

*Fig. 1*

*Fig. 2*

*Fig. 3*

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-3 008 378  (SCHMITZ)<br>* Figures 3,4; claims 7,8,11,14 *<br>--- | 1,5 | B 62 D  33/02 |
| A | DE-A-3 518 509  (SCHMITZ)<br>* Figures 1-3; claim 1 *<br>--- | 1,5 | |
| A | FR-A-1 393 315  (WUPPERMANN)<br>* Page 1, left-hand column, paragraph 2 *<br>----- | 1 | |

TECHNICAL FIELDS SEARCHED (Int. Cl.4)

B 62 D

The present search report has been drawn up for all claims

| Place of search | Date of completion of the search | Examiner |
|---|---|---|
| THE HAGUE | 12-01-1989 | SCHMITTER J.M. |

EPO FORM 1503 03.82 (P0401)